Europäisches Patentamt

European Patent Office

Office européen des brevets

⑩

(11) Publication number: **0 208 408**
**B1**

(12) **EUROPEAN PATENT SPECIFICATION**

(45) Date of publication of patent specification: **13.06.90**

(21) Application number: **86304194.3**

(22) Date of filing: **03.06.86**

(51) Int. Cl.⁵: **F 16 K 5/04, F 16 K 27/06**

(54) Reinforced plastic valve and method of forming it.

(30) Priority: **03.06.85 US 740228**

(43) Date of publication of application:
**14.01.87 Bulletin 87/03**

(45) Publication of the grant of the patent:
**13.06.90 Bulletin 90/24**

(84) Designated Contracting States:
**DE FR GB IT**

(56) References cited:
**BE-A- 635 934**
**FR-A-1 555 545**
**US-A-3 092 365**
**US-A-3 314 644**
**US-A-3 825 030**

(73) Proprietor: **KEROTEST MANUFACTURING CORPORATION**
**2525 Liberty Avenue**
**Pittsburgh Pennsylvania 15222 (US)**

(72) Inventor: **Conley, Richard W.**
**342 Ashton Avenue**
**Pittsburgh PA 15207 (US)**
Inventor: **Tremblay, Richard P.**
**715 Vallevista**
**Pittsburgh PA 15234 (US)**

(74) Representative: **Allsop, John Rowland**
**Rowland Allsop & Co. Black Boy Yard 15 High Street**
**West Wycombe High Wycombe, Bucks. HP14 3AE (GB)**

Courier Press, Leamington Spa, England.

## Description

This invention relates to a reinforced plastic valve and, more specifically, to such a plastic valve which should be capable of operating at higher pressure ratings for an extended period of time.

Plastic valves, such as those disclosed in U.S. Patent Nos. 4,014,513; 4,171,711; 4,234,011; and 4,488,741, have recently been satisfactorily and successfully employed for the flow control of numerous types of fluids in various piping systems and in a wide range of environmental conditions. However, because of the nature of plastic, there have heretofore been some limitations on the amount of fluid pressure which should be allowed in systems which employ plastic valves. For example, it has been found that, when various plastic valves have been utilized in systems which have a relatively high operating pressure, after an extended period of time, the valve plug and/or valve body can experience "creep" which alters the design dimensions of the valve and/or plug to decrease its overall efficiency and reliability.

"Creep" can be defined as progressive strain without increased stress. If one is free to select alternative materials of construction, it is possible to eliminate any real concern for "creep". However, there are instances where the plastic body material must be identical to that of the piping system. For example, if the body is to be fused to the pipes in the system, the same material is required for a proper union. The piping could display high "creep" characteristics and still be reliable while the same "creep" in the body could alter its dimensions and reduce the reliability of sealing around the plug which prevents leakage and sealing of the valve seat which controls flow through the valve.

Although not specifically related to the type of valve of the present invention, U.S. Patent No. 3,092,365 discloses a rubber plug for a valve which is basically formed around and reinforced by an internal metal structure. Other types of valves have employed inserts in various types of closure members and in various areas of the valve body to generally solve different problems than that of "creep" as described hereinbefore. For example, U.S. Patent No. 3,133,722 discloses a sleeve liner which can be made of plastic material but is intended to serve as a backing material for a tapered plug member which is primarily intended to function as the closure device for the valve. U.S. Patent No. 4,303,223 discloses valve facing strips of a fire hydrant valve which are primarily intended to provide a reliable, low friction working surface for the axially movement of the valve disclosed therein.

Additional patents disclose some form of sleeve or reinforcing element which are not primarily intended to strengthen the valve body but are instead intended to insure proper sealing of the valve during closure. For example, U.S. Patent No, 3061,269 discloses an internal sleeve which can be made of numerous types of material but is primarily intended to provide a surface having a low-coefficient of friction for the rotation of the valve closure member disclosed therein. Similarly, U.S. Patent No. 3,398,925 discloses a ball valve which has annular reinforcing means at the edge seals thereof to insure that proper sealing is maintained against the surface of the ball to prevent the loss of fluid from the flow passages thereof.

U.S. Patent No. 3,091,428 discloses a metallic ball valve and U.S. Patent Nos. 3,192,945 and 3,913,610 disclose metallic butterfly valves which are primarily intended for use in metal piping systems. The ball valve of U.S. Patent No. 3,091,428 includes a central cylindrical ring section which primarily supports the ball and to which identical cups are joined to form the composite valve. Similarly, the butterfly valves of U.S. Patent Nos. 3,192,945 and 3,913,610 disclose cylindrical metallic sleeves or body portions which primarily rotatably support the butterfly closure members thereof. These valves include the provision of a lining or interior coating for the cylindrical metallic portion which is formed of resilient rubber-like, plastic, or synthetic material to provide the sleeve with erosion and/or corrosion protection.

More significantly, U.S. Patent No. 4,348,006 discloses a butterfly-type valve having a plastic body portion with a valve seat formed by a metal sleeve molded within and sealed to the plastic valve body portion with an annular rubber sleeve insert vulcanized to the metal sleeve. The metal sleeve is intended to prevent migration or "creep" of the elastomeric insert but additional sealing means between the metal sleeve and the plastic body portions is employed to insure that there will be no fluid leakage therebetween.

Finally, although not intended to reinforce the valve body thereof or to qualify the valve for use with fluids operating at higher pressures, U.S. Patent No. 3,526,386 (& FR—A—1 555 545) discloses a plastic valve having a metallic sleeve which is inserted in and embedded within the flow line thereof. The sleeve is said to "reinforce" the flow line but is primarily utilized to provide a stronger, reinforced coupling means for installing the plastic valve within a piping system.

Consequently, there remains a need for providing a plastic valve which includes means for insuring that the valve can be satisfactorily employed in fluid systems of higher pressure without any detriment thereto over an extended period of time.

According to the invention there is provided a reinforced plastics valve comprising, a generally cylindrical valve body portion formed of a plastics material and having an axially extending interior chamber, a pair of flow lines intersecting said valve body portion and said interior chamber thereof, and a flow isolation member mounted in said chamber selectively rotatable to control a flow of fluid through said flow lines, said valve body portion being provided with a cylindrical reinforcing sleeve formed of a reinforcing material stronger than said plastics material encased within said plastics material and surrounding said interior chamber, said sleeve having flow openings therethrough which are aligned with said flow lines, characterised in that said reinforcing sleeve extends around said valve body portion and has an upper portion surrounding said interior chamber above said flow lines and a lower portion surrounding said interior chamber below said flow lines, said upper portion of said reinforcing sleeve having axially extending shoulder means and said flow isolation member having radially extending rotation stop means, said axially extending shoulder means being aligned with said stop means for limiting the rotation of said flow isolation member.

According to another aspect of the invention there is provided a method of forming a reinforced plastics valve comprising forming a cylindrical reinforcing sleeve having flow openings therein, forming a plastics valve body with the reinforcing sleeve encased therewithin, the valve body having an axially extending interior chamber intersected by a pair of flow lines, with the flow lines being in alignment with the flow openings of said sleeve, mounting a flow isolation member in said chamber to control flow of fluid through said flow line and characterised by forming an axially extending shoulder means on an upper portion of said reinforcing sleeve above said flow lines, forming a radially extending stop means on said isolation member, and aligning the stop means with the shoulder means such that said stop means limits rotation of said flow isolation member within the valve body.

The invention will now be described by way of example with reference to the acompanying drawings wherein:

Figure 1 is an elevational view partially in section of a preferred valve including various features of the invention.

Figure 2 is a view of the preferred valve as seen along 2—2 in Figure 1.

Figure 3 is a sectional view of the preferred reinforcing sleeve oriented in a manner similar to its orientation in Figure 1.

Figure 4 is a view of the preferred sleeve as seen along line 4—4 of Figure 3.

Figure 5 is an elevational view of the preferred sleeve as seen along line 5—5 of Figure 4.

Figure 6 is an exploded view partially in section of the preferred sleeve including its method of formation within a plastic valve body mold and various features of the invention.

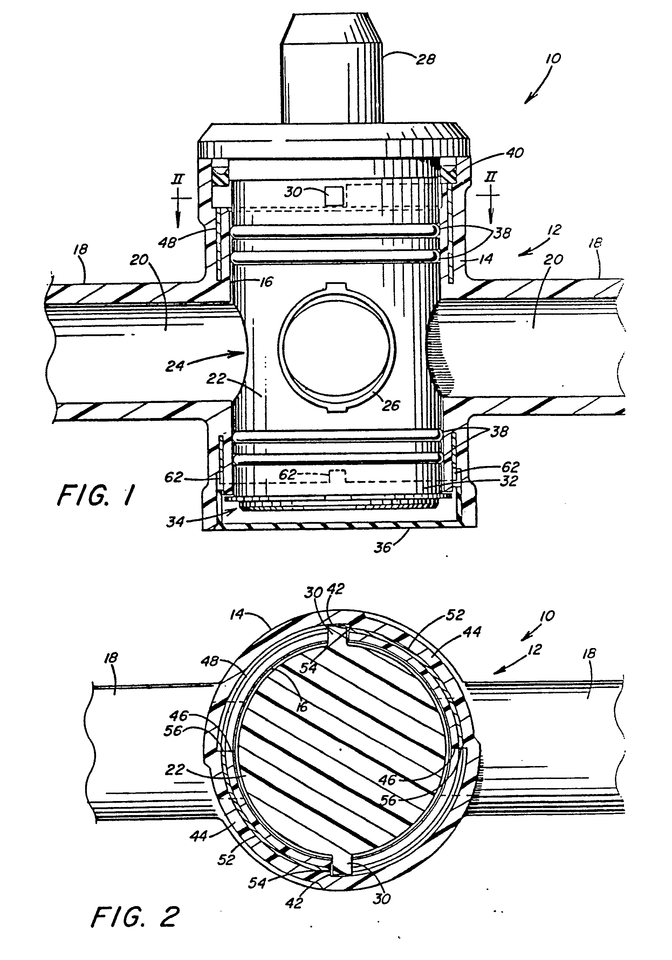

As seen in Figure 1, a valve 10 is formed of plastic and includes a valve body 12 having a general cylindrical major body portion 14 with an axially extending interior chamber 16. A pair of flow lines 18 of the body 12 are preferably integrally formed with and intersect the major body portion 14 and include flow passages 20 thereof which intersect the chamber 16. A rotatable flow isolation member in the form of a plug 22 is mounted within the chamber 16 to be capable of being selectively positioned to allow or prevent flow through the flow passages 20.

Specifically, as seen in Figure 1, the plug 22 includes a transverse opening 24 therethrough to allow flow through the flow passages 20 and opposing seats 26 which can be aligned with the passages 20 when the plug 22 is rotated to prevent the flow of liquid therethrough. The plug 22 includes a handle 28 and at least one radially extending rotational stop element 30 which will be discussed in detail hereinbelow. Further, the lower end 32 of the plug 22 includes a groove and retaining means 34 for preventing withdrawal of the plug 22 from the chamber 16 after it has been installed within the major body portion 14. A sealed bottom 36 is added to the major body portion 14 after installation of the plug 22 therein to prevent dirt or ice from forming at the bottom of the valve 10 and interfering with the rotation of the plug 22. The preferred plug 22 is provided a plurality of O-ring seals 38 to primarily retain fluid within the flow passages 20 and the transverse opening 24 of the plug 22 and prevent leakage at the top or bottom of the plug 22 during normal use of the valvew 10. A sealing ring 40 is also provided to the top of the valve 10 to prevent the ingress of fluid or contaminates into the chamber 16 around the top of the plug 22. If "creep" were allowed to occur to the body portion 14, proper sealing contact between the O-ring seals 38 and seats 26 and the chamber 16 could not be maintained and leakage through the valve 10 and to the atmosphere could occur.

As seen in Figure 2, the preferred plug 22 includes two radially extending rotational stop elements 30 which are shown in a position for allowing flow through the valve 10. The rotational stop elements 30 are prevented from rotation in a clockwise direction by respective abutting contact with the ends 42 of a pair of axially extending sectors 44 of the major body portion 14. Rotation of the plug 22 in a counter-clockwise direction would cause the rotational stop elements 30 to make contact with the other ends 46 of the axially extending sectors 44 of the major body portion 14 to insure that the seats 26 are properly aligned with the flow passages 20 when the valve 10 is closed. It should be noted that each of the sectors 44 extends less that ninety degrees to accommodate for the thickness of the stop elements 30 while allowing a full ninety degree rotation of the plug 22. Clearly, the sectors 44 and stop elements 30 might be oriented to any circumferential location around the plug 22 and body portion 14 as long as the opening 24 and seats 26 will be properly alignable with the flow passages 20. It would also be obvious to alter the preferred valve 10 to include only one stop element and one sector of approximately two hundred-seventy degrees for similar limitations on the rotation of the plug.

As thus described, the preferred valve is similar to the valve disclosed in U.S. Patent Nos. 4,014,513; 4,171,711; 4,324,011; and 4,488,741. Although the valves disclosed therein have been satisfactorily employed, the preferred valve 10 includes features which could accommodate a higher pressure rating while being formed of a plastic material which is identical to that selected for the piping system in which it is to be employed. As mentioned hereinabove it has been found that when some plastic valves are subjected to higher operating pressures over an extended period of time, the body can experience "creep" where the design dimensions tend to change to interfere with the overall integrity of the plug as installed in the valve body and reduce the efficiency of the sealing of the valve. Accordingly, the valve 10 includes a preferred major body portion 14 which includes reinforcing means formed of a reinforcing material which is stronger than the plastic material.

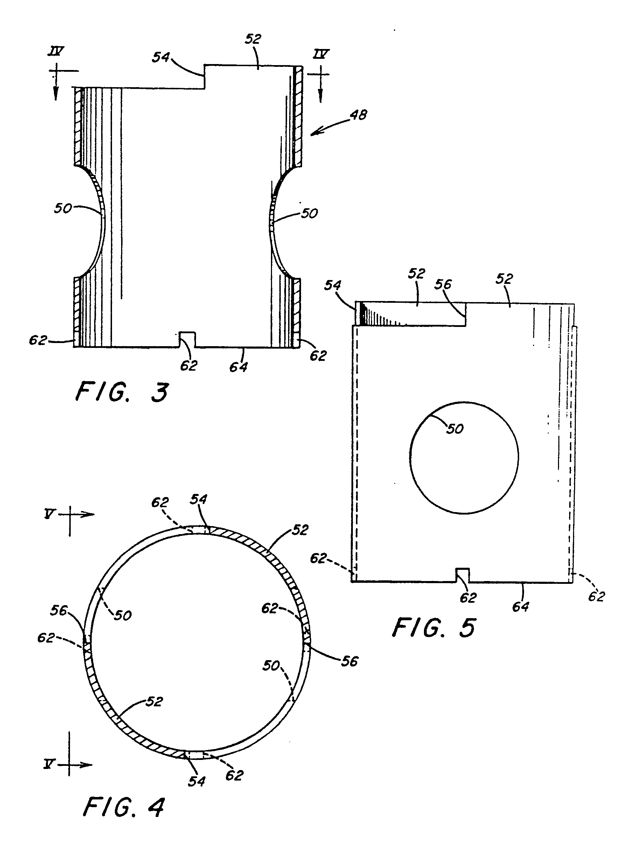

The reinforcing means is in the form of a sleeve 48 which extends around the major body portion 14. As best seen in Figures 3, 4, and 5, the sleeve 48 is preferably formed of metal and is generally cylindrical to completely encircle the major body portion 14. A pair of openings 50 are formed through the sleeve 48 and are to be aligned with the flow passages 20 of the flow lines 18.

Additionally, it will be noted that the sleeve 48 includes axially extending portions 52 at the upper end thereof which portions 52 will lie within a pair of axially extending sectors 44 of the body portion 14. As a result, the axially extending portions 52 each include ends 54 which are aligned with the ends 42 of the sectors 44 and ends 56 which are aligned with the ends 46 of the sectors 44. As a result, with the sleeve 48 properly embedded within the major body portion 14, the sleeve 48 will tend to reinforce the major body portion 14 and further insure that there is adequate strength in the axially extending sectors 44 for properly serving as a means to limit rotation of the plug 22 throughout the life of the valve 10. In fact, it is significant that the sectors 44 be sufficiently stronger than the stop elements 30 to insure that the stop elements 30 will be cleanly severed from the plug 22 if one tries to force the rotation of the plug 22 by the sectors 44. It is better for the stop elements to be cleanly removed than to allow forced rotation of the plug 22 to result in its being directly damaged in a manner which would interfere with its ability to selectively control flow through the valve.

As shown in Figures 1 through 5, sleeve 48 is encased within the plastic material of the major body portion 14. In other words, the sleeve 48 will properly add reinforcement to the major body portion 14 but will not generally be exposed to the environment or to the fluid within the flow passages 20 or the interior chamber 16. Since it is not exposed to the fluid in the valve 10, there is no need to be concerned with any leakage around the sleeve 48 which might otherwise occur. Further, since the preferred reinforcing sleeve 48 does not extend to the interior surface of the interior chamber 16, the preferred plug 22 will rotate and provide sealing as if it were installed within an entirely plastic major body portion 14.

As thus described, it is expected that the reinforcing sleeve 48 will prevent creep which may otherwise have existed in the major body portion 14. It is also expected that the sleeve 48 will be properly retained within the major body portion 14 by the incasement of the sleeve 48 within the plastic material of the major body portion 14. However, should there turn out to be some localized movement of the plastic material of the major body portion 14, it would be possible to provide rounded edges for the openings 50 to insure that no cracks or other failure of the plastic material develops at the edges of the holes 50. Additionally, although the sleeve 48 should remain in place since it is encased in the plastic material, an alternative configuration could include a plurality of radially extending holes at various locations around the sleeve 48 to cause the plastic material to flow therethrough when the major body portion 14 is being formed. Since the plastic material may not directly adhere to the metal of the sleeve 48, the additional holes would further insure that there is a complete incasement of the sleeve 48 within the plastic material. With the plastic material extending through such a plurality of holes in the sleeve 48, the sleeve 48 would be further secured within the major body portion 14 to resist any rotational forces created by the stop elements 30 during rotation of the plug 22.

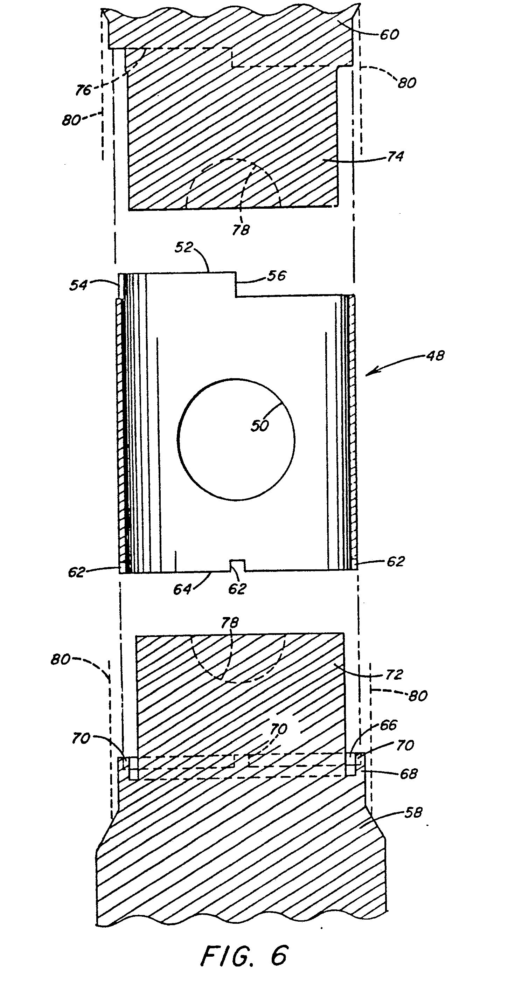

To provide the valve 10 with the included reinforcing sleeve 48, the preferred method of forming the valve body 12 includes means for insuring that the sleeve 48 is properly supported and oriented during the plastic valve molding process. Specifically, as seen in Figure 6, a bottom core 58 and a top core 60 of the basic valve body mold are utilized to properly support and orient the preferred sleeve 48. Additional portions of the valve body mold have been eliminated from Figure 6 in order to be able to properly demonstrate those portions which are essential to an understanding of the overall method of forming the valve body 12. For example, the valve body mold would preferably include a pair of passage cores for forming the flow passages 20 which passage cores would intersect with and join the bottom core 58 and top core 60.

Lastly, the valve body mold would primarily include an external mold which would be formed of two halves for the formation of the exterior of the valve body 12. It should be understood that the injection molding of plastic material of the type used to form the preferred valve body 12 is well known in the art. For example, if one were to provide any of the plastic valves mentioned as the prior art hereinabove, it would be quite common to inject plastic material into a valve body mold of the general type described and to allow the plastic material to set prior to disassembly of the mold and removal of the cones therefrom.

However, in order to specifically support and orient the sleeve 48, the preferred sleeve 48 includes four evenly-spaced notches 62 in the lower edge surface 64 thereof. The bottom core 58 includes a shoulder 66 on an upwardly extending cylindrical portion 68 thereof for receipt of the lower edge surface 64 of the sleeve 48 thereon. The shoulder 66 has four evenly-spaced tabs 70 which are alignable with the notches 62 for respectively receiving them thereon. Consequently, with the sleeve 48 installed on the cylindrical portion 68 of the bottom core 58, the sleeve 48 is concentrically positioned on the core 58 and separated from a center portion 72 thereof which is intended to partially form the interior chamber 16. Further, because of the orientation of the notches 62 and the tabs 70, the sleeve 48 can be positioned on the bottom core 58 with the openings 50 properly aligned for the formation of the flow lines 18.

Once the sleeve 48 is properly supported by the bottom core 58, the top core 60 can be joined to the bottom core 58 as the center portion thereof combines with the center portion 72 of the bottom core 58 to complete the form needed for the interior chamber 16. The top core 60 includes circumferential recessed portions 76 for receipt of the axially extending portions 52 of the sleeve 48 for the eventual formation of the axially extending sectors 44 of the body portion 14.

After the bottom core 58 and the top core 60 are joined in this manner with the sleeve 48 properly positioned therebetween, the openings 50 of the sleeve 48 are aligned with a pair of cavities 78 at opposite sides of the combined center portions 72, 74. The cavities 78 are intended to receive the interior end of the passage cores mentioned hereinabove. It should be clear that the passage cores could be formed as a single long core extending through the bottom core 58 and the top core 60 so that the cavities 78 would alternatively extend all the way therethrough. In either case, sleeve 48 is aligned with the passage cores to allow the formation of the flow passages 20 of the flow lines 18. When the exterior halves of the valve body mold are fully installed, as generally represented by the dotted lines 80 to show their relationship to the cores 58, 60, the exterior walls of the major body portion 14 will be formed with an outside diameter larger than the exterior diameter of the sleeve 48. Accordingly, sufficient plastic material will be formed around the exterior of the sleeve 48 to primarily encase the sleeve 48 within the major body portion 14. Since the passage core and the exterior halves of the valve body mold would not make any contact with the sleeve 48, the sleeve 48 would be surrounded by the plastic material at all locations other than those where there is direct contact with the cores 58, 60. Consequently, the sleeve 48 will be located radially within the cylindrical wall of the major body portion 14 to include the plastic material internally and externally thereof.

It should be clear that, after the entire valve body mold is assembled, plastic material can be injected into the mold to at least partially surround the sleeve 48. After the plastic material has been allowed to set and the exterior mold and interior cores are removed, the sleeve 48 will be retained within the valve body 12.

Although the sleeve 48 is primarily intended to reinforce the major body portion 14 through the use of the valve 10, it is possible that the sleeve 48 may provide an added benefit during formation of the body portion 14. It has been found that when a body portion without an encased sleeve has been molded in the manner generally described hereinabove, it is not uncommon for the body portion to be slightly warped upon removal from the mold with the chamber thereof not having a truly cylindrical shape. As a result, the chamber must be machined to provide the required shape for proper receipt of a plug therein. The sleeve 48 being employed in the method of formation of the body portion 14 as described above could completely eliminate this required step and should, at the least, reduce the amount of machining that may be required. Further, if there is no need for such machining, it has been found that the interior surface of the chamber as formed by the body mold has excellent characteristics for direct installation of the plug therein.

Further, it would clearly be possible for various alterations to be made to the preferred embodiment described hereinabove without departing from the scope of the invention as claimed. For example, it might be advantageous to include only one notch at a lower edge surface of the sleeve to mate with only one tab on the bottom core to insure that there is only one possible orientation of the sleeve relative to the bottom core. Additionally, although the "bottom core" was used to primarily support the sleeve 48 during the formation of the preferred valve body 12, it would be possible for either a bottom or a top core to be properly configured for this purpose while still falling within the scope of the invention as claimed.

Although the method of providing the preferred valve body 12 is expected to properly encase the sleeve 48 within the plastic material, it should be recognized that the bottom core or the top core could be slightly altered to further surround the end edges of the sleeve 48 with plastic material. As one example of any number of ways in which this could be accomplished, the shoulder 66 near each of the evenly spaced tabs 70 could be configured to discontinue a short distance from the tabs 70 to cause the lower edge surface 64 of the sleeve 48 to be separated from any portion of the bottom core 58. With the major circumference of the lower edge surface 64 being separated from any portion of the bottom core 58, the plastic material will primarily surround and encase the major circumference of the lower edge surface 64. Such a configuration would still fall within the scope of the invention as claimed since the sleeve would still include a generally radially extending surface which would be installed on a sleeve supporting surface of the valve body mold even though the supporting surface would be circumferentially smaller.

Still further, it should be clear that the preferred sleeve 48 is simply one embodiment which could be utilized to practice the invention claimed. Specifically, it would be possible for the reinforcing sleeve 48 to be made of some other material while still satisfying the basic criteria of reinforcing the major body portion 14.

**Claims**

1. A reinforced plastics valve comprising, a generally cylindrical valve body portion (14) formed of a plastics material and having an axially extending interior chamber (16), a pair of flow lines (20) intersecting said valve body portion (14) and said interior chamber (16) thereof, and a flow isolation member (22) mounted in said chamber selectively rotatable to control a flow of fluid through said flow lines (20), said valve body portion (14) being provided with a cylindrical reinforcing sleeve (48) formed of a reinforcing material stronger than said plastics material encased within said plastics matrial and surrounding said interior chamber (16), said sleeve (48) having flow openings (50) therethrough which are aligned with said flow lines (20), characterised in that said reinforcing sleeve (48) extends around said valve body portion (14) and has an upper portion surrounding said interior chamber (16) above said flow lines (20) and a lower portion surrounding said interior chamber (16) below said flow lines (20), said upper portion of said reinforcing sleeve (48) having axially extending shoulder means (52) and said flow isolation member (22) having radially extending rotation stop means (30), said axially extending shoulder means (52) being aligned with said stop means (30) for limiting the rotation of said flow isolation member (22).

2. A valve as claimed in claim 1, wherein said reinforcing sleeve (48) is located radially within a cylindrical wall of said body portion (14) to have said plastic material internally and externally thereof.

3. A valve as claimed in any preceding claim wherein said reinforcing material is a metal.

4. A method of forming a reinforced plastics valve comprising forming a cylindrical valve sleeve (48) having flow openings (50) therein, forming a plastics valve body (14) with the reinforcing sleeve (48) encased therewithin, the valve body (14) having an axially extending interior chamber (16) intersected by a pair of flow lines (20), with the flow lines (20) being in alignment with the flow openings (50) of said sleeve (48), mounting a flow isolation member (22) in said chamber (60) to control flow of fluid through said flow line (20) and characterised by forming an axially extending shoulder means (52) on an upper portion of said reinforcing sleeve (48) which lies above said flow lines (20), forming a radially extending stop means (30) on said isolation member (22), and aligning the stop means (30) with the shoulder means (52) such that said stop means (30) limits rotation of said flow isolation member (22) within the valve body (14).

**Patentansprüche**

1. Hahn aus verstärktem Kunststoff, mit einem im wesentlichen zylinderförmigen Hahn-Gehäuseabschnitt (14), der aus einem Kunststoffmaterial hergestellt ist und eine sich axial erstreckende innere Kammer (16) aufweist, mit zwei Flußleitungen (20), die den Gehäuseabschnitt (14) sowie dessen innere Kammer (16) schneiden, und mit einem den Fluß unterbrechenden Hahnelement (22), welches in der erwähnten Kammer (16) selektiv drehbar angeordnet ist, um den Fluß eines Mediums durch die erwähnten Flußleitungen zu steuern, wobei der Gehäuseabschnitt (14) in einer zylinderförmigen verstärkenden Hülse (48) versehen ist, die aus einem im Vergleich zum Kunststoffmaterial festeren, verstärkenden Material hergestellt und im Kunststoffmaterial eingeschlossen ist sowie die erwähnte innere Kammer (16) unschließt, wobei die Hülse durchgehende Flußöffnungen (50) aufweist, die deckungsgleich mit den erwähnten Flußleitungen (20) liegen, dadurch gekennzeichnet, daß die verstärkende Hülse (48) sich um den Umfang des Gehäuseabschnittes (14) erstreckt und einen oberen Abschnitt aufweist, der die innere Kammer (16) oberhalb der Flußleitungen (20) umschließt, sowie einen unteren Abschnitt besitzt, die der innere Kammer (16) unterhalb der Flußleitungen (20) unschließt, daß der obere Abschnitt der verstärkenden Hülse (48) sich in axialer Richtung erstreckende Schultermittel (52) aufweist, und daß das Hahnelement (22) zum Unterbrechen des Flußes sich in radialer Richtung erstreckende, die Drehbewegung stoppende bzw. begrenzende Anschlag-Mittel (30) aufweist, und daß die erwähnten, sich in axialer Richtung erstreckenden Schultermittel (52) in bezug auf die erwähnten Anschag-Mittel (30) derart ausgerichtet sind, daß eine Begrenzung der Drehbewegung des Hahnelementes erreicht wird.

2. Hahn nach Anspruch 1, dadurch gekennzeichnet, daß die erwähnte verstärkende Hülse (48) radial innerhalb der zylindrischen Wand des Gehäuseabschnittes (14) angeordnet ist, so daß das Kunststoffmaterial innerhalb und aüßerhalb von der verstärkenden Hülse vorgesehen ist.

3. Hahn nach einem der vorhergehenden Ansprüche, dadurch gekennzeichnet, daß das verstärkende Material ein Metall ist.

4. Verfahren zum Herstellen eines verstärkten Kunststoffhahnes, bei welchem (Verfahren) eine zylindrische verstärkende Hülse (48) für den Hahn hergestellt wird, die Flußöffnungen (50) aufweist, bei welchem ein Hahnkörper (14) aus Kunststoff mit eingeschlossener verstärkender Hülse (48) hergestellt wird, wobei der Hahnkörper (14) eine sich in axialer Richtung erstreckende innere Kammer (16) aufweist, die von einem Paar von Flußleitungen (20) geschnitten wird, wobei die Flußleitungen (20) deckungsgleich mit den Flußöffnungen (50) der Hülse (48) sind, und bei welchem (Verfahren) in der erwähnten Kammer (16) ein Hahnelement (22) zum Unterbrechen des Flußes angeordnet wird, un den Fluß durch die Flußleit ungen (20) zu steuern, dadurch gekennzeichnet, daß an einem oberen, oberhalb der erwähnten Flußleitungen liegenden Abschnitt der verstärkenden Hülse (48) sich in axialer Richtung erstreckende Schultermittel (52) ausgebildet werden, daß sich in radialer Richtung erstreckende Anschlag-Mittel (30) an dem Hahnelement zum Unterbrechen des Flußes geformt werden, und daß die Anschlag-Mittel (30) derart mit den Schultermitteln (52) ausgerichtet werden, daß die Anschlag-Mittel (30) die Drehbewegung des Hahnelementes (22) für die Unterbrechung des Flußes innerhalb des Hahngehäuses (14) begrenzen.

**Revendications**

1. Une vanne en matière plastique renforcée comprenant, une partie de corps de vanne généralement cylindrique (14) constituée en matière plastique et comprenant une chambre intérieure orientée dans la direction axiale (16), une paire de conduites d'écoulement (20) traversant ladite partie de corps de vanne (14) et ladite chambre intérieure (16) de cette vanne, et un élément d'isolation de l'écoulement (22) monté dans ladite chambre de façon à tourner de manière sélective pour commander le passage d'un fluide par lesdites conduites d'écoulement (20) ladite partie de corps de vanne (14) étant équipée d'un manchon cylindrique de renfort (48) constitué en un matériau de renfort plus robuste que ladite matière plastique, enrobé dans ladite matière plastique et entourant ladite chambre intérieure (16), ledit manchon (48) étant traversé par des ouvertures d'écoulement (50) qui sont alignées avec lesdites conduites d'écourement (20), caractérisé en ce que ledit manchon de renfort (48) s'étend autour de ladite partie de corps de vanne (14) et comporte un partie supérieure entourant ladite chambre intérieure (16) au-dessus desdites conduitee d'ecoulement (20), ainsi qu'une partie inférieure entourant ladite chambre intérieure (16) au-dessous desdites conduites d'écoulement (20), ladite partie supérieure dudit manchon de renfort ayant un moyen d'épaulement (52) orienté dans la direction axiale et ledit élément d'isolation (22) ayant un moyen d'arrêt de la rotation (30) orienté dans la direction radiale, ledit moyen d'épaulement orienté dans la direction axiale (52) étant aligné avec ledit moyen d'arrêt (30) pour limiter de rotation dudit élément d'isolation de l'écoulement (22).

2. Une vanne comme revendiqué à la revendication 1, dans laquelle ledit manchon de renfort (48) est situé radialement à l'intérieur d'une paroi cylindrique de ladite partie de corps (14) de façon que ladite matière plastique se trouve à l'intérieur et à l'extérieur du manchon.

3/ Une vanne comme revendiqué dans l'une quelconque des revendications précédentes dans laquelle ledit matériau renfort est un métal.

4. Un procédé de formage d'une vanne en matière plastique renforcée comprenant: le formage d'un manchon cylindrique de renfort de vanne (48) ayant à l'intérieur des ouvertures d'écoulement (50), le formage d'un corps de vanne en matière plastique (14) à l'intérieur duquel le manchon de renfort (48) est enrobé, le corps de vanne (14) comprenant une chambre intérieure (16) orientée dans la direction axiale traversée par une paire de conduites d'écoulement (20), les conduites d'écoulement (20) étant alignées avec les ouvertures d'écoulement (50) dudit manchon (48), le montage d'un élément d'isolation de l'écoulement (22) dans ladite chambre (16) pour commander le passage d'un fluide par ladite conduite d'écoulement (20) et caractérisé par le formage d'un moyen d'épaulement (52) orienté dans la direction axiale sur une partie supérieure du manchon de renfort, située au-dessus desdites conduites d'écoulement (20), le formage d'un moyen d'arrêt orienté dans la direction radiale (30) sur ledit élément d'isolation (22), et l'alignement du moyen d'arrêt (30) avec le moyen d'épaulement (52) de façon que ledit moyen d'arrêt (30) limite la rotation dudit moyen d'isolation de l'écoulement (2) à l'intérieur du corps de vanne (14).

FIG. 1

FIG. 2

FIG. 3

FIG. 4

FIG. 5

FIG. 6